(19) Europäisches Patentamt
European Patent Office
Office européen des brevets

(11) **EP 1 342 529 B1**

(12) **FASCICULE DE BREVET EUROPEEN**

(45) Date de publication et mention
de la délivrance du brevet:
**01.08.2012 Bulletin 2012/31**

(51) Int Cl.:
**B23K 11/04** (2006.01)

(21) Numéro de dépôt: **03290522.6**

(22) Date de dépôt: **04.03.2003**

(54) **Procédé et dispositif de contrôle du processus de soudage par étincelage de deux pièces métalliques**

Verfahren und Vorrichtung zum Steuern eines Abbrennstumpfschweissverfahren von zwei metallischen Werkstücken

Flash butt welding control method and apparatus for two metallic workpieces

(84) Etats contractants désignés:
**AT BE BG CH CY CZ DE DK EE ES FI FR GB GR HU IE IT LI LU MC NL PT RO SE SI SK TR**

(30) Priorité: **05.03.2002 FR 0202798**

(43) Date de publication de la demande:
**10.09.2003 Bulletin 2003/37**

(73) Titulaire: **Siemens VAI Metals Technologies SAS**
**42403 Saint-Chamond (FR)**

(72) Inventeurs:
• **Gobez, Pascal**
**42350 La Talaudière (FR)**
• **Nasserian, Afchine**
**92400 Corbevoie (FR)**
• **Valence, Marc**
**92400 Courbevoie (FR)**

(74) Mandataire: **Fischer, Michael et al**
**Siemens AG**
**Postfach 22 16 34**
**80506 München (DE)**

(56) Documents cités:
EP-A- 0 334 969    EP-A- 0 413 821
US-A- 3 528 340    US-A- 4 044 219

**Description**

L'invention a pour objet un procédé de contrôle du processus de soudage bout à bout de deux pièces métalliques, en particulier deux tôles en forme de bande défilant l'une après l'autre suivant un axe longitudinal et couvre également un dispositif de contrôle, selon ce procédé, du fonctionnement d'une machine de soudage par étincelage suivant les préambules des revendications 1 et 11. Un tel procédé et un tel dispositif sont décrits dans JP 57 019 187 A.

Dans les installations métallurgiques, en particulier de production de bandes métalliques, on est souvent amené à raccorder deux bandes successives, par exemple pour former des bobines de tôles de grande longueur à partir de bobines de longueur plus petite ou, encore, pour raccorder des tôles issues de bobines différentes et destinées à être traitées dans des installations de transformation métallurgique à fonctionnement continu comme, par exemple, les lignes de décapage, de laminage, ou de galvanisation. Les machines de soudage utilisées à cet effet doivent être spécialement adaptées au but recherché. Par exemple, on peut appliquer l'une sur l'autre les extrémités arrière et avant de deux bandes successives et les souder par passage d'un courant électrique entre deux molettes se déplaçant transversalement. Cependant, il se produit, alors, une surépaisseur qui, dans de nombreux cas, doit être évitée.

Il est donc souvent nécessaire de souder les deux bandes bout à bout. Pour cela, il faut d'abord cisailler les deux extrémités, respectivement arrière et avant des deux bandes le long de deux lignes parfaitement parallèles puis les rapprocher l'une de l'autre pour mettre en contact les bords en vis à vis, entre lesquels est appliquée une tension électrique qui, dans les machines dites par étincelage, peut être d'assez bas voltage.

En effet, il existe nécessairement, le long des bords cisaillés des deux pièces, des irrégularités qui, lors du rapprochement des bords cisaillés, déterminent une série de micro-contacts répartis le long de la ligne de jonction et produisant chacun un micro-court-circuit dans lequel circule un courant de forte intensité. Dans chaque zone de court-circuit, le métal constituant le pont de court-circuit devient liquide. Une goutte de métal fondu est alors éjectée sous l'effet des forces électromagnétiques en générant une étincelle, mais la zone entourant l'emplacement du pont de court-circuit s'est fortement échauffée.

Étant donné que les ponts de court-circuit sont répartis tout le long des bords en contacts, on réalise ainsi un chauffage à haute température, sur toute leur largeur, des extrémités des deux bandes.

Lorsque les deux pièces ont été portées à une température suffisante, on les applique l'une contre l'autre en exerçant une pression élevée qui détermine une interpénétration des extrémités en contact, de part et d'autre de la ligne de jonction, en produisant la soudure par une sorte de forgeage.

Ce procédé de soudage dit par étincelage, est bien connu et ne nécessite pas une explication détaillée.

Une machine de soudage par étincelage doit donc réaliser différentes fonctions. En effet, il faut successivement positionner les extrémités des deux bandes qui sont serrées entre deux paires de mors, cisailler deux bords parallèles, les mettre en contact et faire passer le courant pour chauffer les extrémités des deux bandes à la température voulue, et, enfin, les appliquer assez violemment l'une contre l'autre, afin de réaliser l'effet de forgeage recherché. Ce forgeage produit, généralement, une sorte de bourrelet qui, après refroidissement, doit être raboté pour donner au produit une épaisseur constante.

D'une façon générale, une machine de soudage par étincelage comprend donc deux paires de mors de serrage des extrémités des deux pièces à souder, montées respectivement sur un bâti fixe et sur un bâti mobile, un circuit électrique de soudage comprenant une source de courant électrique à deux pôles reliés respectivement aux deux paires de mors de serrage et des moyens de commande du déplacement du bâti mobile vers le bâti fixe, comprenant, habituellement, un ou plusieurs vérins hydrauliques, pour le rapprochement et la mise en contact, des bords à souder.

Une machine de ce type est décrite en détail, par exemple dans le brevet français n°2756504 qui couvre une disposition particulière permettant de réaliser sur une même machine les opérations de cisaillage, de soudage et de rabotage de la soudure. Mais on connaît d'autres types de machines comportant, de façon analogue, une pince mobile et une pince fixe, des moyens de réglage des distances de porte-à-faux et des moyens de rapprochement des bords cisaillés.

Les pinces de serrage qui comportent chacune une paire de mors placés de part et d'autre de la bande, ont une grande inertie thermique et risquent d'absorber la chaleur développée par étincelage.

Pour permettre le chauffage de l'extrémité de chaque bande à la température voulue, il est donc nécessaire de laisser, entre le bord cisaillé et l'extrémité correspondante de la pince, une distance libre, appelée porte-à-faux, qui doit être déterminée selon des critères éventuellement contradictoires.

En effet, une certaine quantité de métal est consommée pendant l'étincelage, puisque, comme on l'a vu, les ponts de court-circuit qui déterminent le chauffage provoquent l'éjection de gouttelettes de métal. La longueur de porte-à-faux doit donc permettre cette consommation de métal.

Cependant, les bandes à souder ont une épaisseur relativement faible et, compte tenu de la longueur de porte-à-faux nécessaire, il existe un risque de flambage des extrémités provoquant des déformations et une mauvaise soudure.

Il en résulte que les distances de porte-à-faux doivent être calculées au plus juste.

Par ailleurs, lors du forgeage, il faut, d'une part, éviter un rapprochement trop brutal pouvant provoquer le flambement des parties en porte-à-faux et, d'autre part, stopper le mouvement sur une butée afin de ne pas dépasser pour le forgeage la longueur chauffée de porte-à-faux. Mais un arrêt brutal sur une butée provoque un rebond préjudiciable à la qualité de la soudure car il exerce une brève traction sur la soudure qui vient d'être réalisée.

Tous ces phénomènes dépendent des caractéristiques des pièces à souder, en particulier leur épaisseur et la composition du métal.

De telles machines doivent donc être conduites par un personnel expérimenté capable de contrôler le fonctionnement de la machine en surveillant les conditions de réalisation de la soudure.

Pour résoudre ces problèmes, on a proposé différents systèmes permettant de contrôler automatiquement les déplacements des pièces à souder, au moins pour certaines phases du processus de soudage.

Par exemple, étant donné que le déplacement du bâti mobile est commandé, habituellement, par un ou plusieurs vérins hydrauliques, on a proposé, dans le document US-A-3528340, de contrôler leur action, dans un processus semi-automatique, au moyen d'un distributeur commandé par une came ayant un profil parabolique permettant d'augmenter progressivement la vitesse des mors mobiles pendant la phase d'étincelage, jusqu'à la vitesse nécessaire au forgeage.

Cependant, il faut aussi éviter un rapprochement trop rapide qui pourrait provoquer un court-circuit franc susceptible de stopper le phénomène d'étincelage.

Le profil de la came doit donc être adapté à la nature et aux dimensions, en particulier l'épaisseur, des pièces à souder et peut être déterminé, par exemple, par des essais.

Pour changer le programme de fabrication, il faut donc utiliser une nouvelle came ayant un profil adapté aux caractéristiques du nouveau produit.

Or, depuis un certain temps, les besoins de la clientèle sont de plus en plus variés et il n'est pas facile de disposer d'un nombre suffisant de cames permettant de répondre à toutes les demandes.

De plus, les cames sont établies pour certaines conditions de soudage et il n'est pas possible, de cette façon, de tenir compte, pour chaque pièce, et à chaque instant, des conditions réelles dans lesquelles s'effectuent le chauffage et le forgeage des pièces.

C'est donc l'expérience de l'opérateur et de nouveaux essais qui permettent de s'adapter aux besoins mais, pour cela, il faut un temps assez long.

Dans un autre procédé dit « par approches successives, on mesure le courant de soudage et l'on contrôle le déplacement du bâti mobile pendant l'étincelage, de façon à maintenir la valeur mesurée du courant entre deux valeurs prédéterminées afin d'éviter, d'une part, l'arrêt de l'étincelage et, d'autre part, le court-circuit. Dans le procédé décrit, par exemple dans le document EP-A-0413821, on arrête le déplacement lorsque le courant mesuré atteint une valeur prédéterminée et l'on commande un mouvement oscillatoire des pièces à souder, à une fréquence comprise entre 10 et 50 Hz.

Cependant, un tel procédé ne permet pas non plus de tenir compte de tous les phénomènes physiques qui se produisent au cours du processus de soudage.

L'invention a pour objet de résoudre l'ensemble de ces problèmes grâce à un nouveau procédé permettant de contrôler automatiquement le déplacement du bâti mobile de façon à réaliser la soudure dans les meilleures conditions en tenant compte, non seulement des caractéristiques structurelles et dimensionnelles des pièces à souder mais également des valeurs réelles, à chaque instant, des paramètres électriques de soudage.

De plus, l'invention permet de contrôler les positions et les mouvements relatifs des pièces à souder, non seulement pendant la phase d'étincelage mais également pendant le forgeage et même, après forgeage.

En effet, l'invention permet aussi, par le contrôle en position des mors, de contrôler des conditions optimales pour la solidification de la soudure, le rabotage et le recuit de celle-ci.

Il est à noter, également, que le procédé selon l'invention est particulièrement avantageux pour les installations de production en ligne continue de bandes métalliques qui nécessitent le soudage en bout, de bandes enroulées dont les caractéristiques peuvent varier en fonction du programme de fabrication.

En effet, dans de telles installations, une rupture de la soudure, par exemple au cours du laminage, entraîne un arrêt de production économiquement préjudiciable. Il est donc particulièrement intéressant, grâce à l'invention, d'améliorer la qualité des soudures en adaptant automatiquement les conditions de soudage aux caractéristiques des tôles à souder.

D'autre part, la réalisation de la soudure entre deux bandes successives nécessite l'arrêt du défilement. Dans les installations en ligne continue, il est donc nécessaire de prévoir des accumulateurs de grandes dimensions pour poursuivre le défilement dans les autres sections de la ligne pendant le temps nécessaire à la soudure.

Les dispositions selon l'invention permettent de réduire le temps d'un cycle de soudure et, ainsi, de diminuer l'importance des accumulateurs nécessaires.

L'invention concerne donc, d'une façon générale, un procédé de contrôle du processus de soudage en bout, par étincelage, de deux pièces métalliques disposées l'une après l'autre le long d'un axe longitudinal de défilement, dans une machine de soudage du type comprenant deux paires de mors de serrage montées respectivement sur un bâti fixe et sur un bâti mobile déplaçable par rapport au bâti fixe, des moyens électriques de soudage comprenant une source de courant électrique à deux pôles reliés respectivement aux deux paires de mors de serrage, des moyens de commande du serrage des deux paires de mors, respectivement à proximité d'une extrémité arrière, dans le sens de défilement, d'une première pièce et à proximité d'une extrémité avant d'une seconde pièce, et des moyens de commande d'un déplacement longitudinal du bâti mobile par rapport au bâti fixe, pour la mise en contact desdites extrémités arrière et avant des deux pièces et le passage d'un courant électrique avec une tension (U) et une intensité de soudage (I), le processus de soudage étant réalisé en deux phases successives, respectivement une première phase d'étincelage pour le chauffage des extrémités en contact à une température de soudage, par production d'une série de micro-contacts électriques avec projection d'étincelles le long desdites extrémités, et une seconde phase de forgeage avec interpénétration des extrémités chauffées sur une longueur de forgeage, procédé dans lequel on détermine à chaque instant la valeur d'un ensemble de paramètres électriques comportant au moins la tension ($U_s$) et l'intensité ($I_s$) du courant de soudage.

Conformément à l'invention, on détermine à chaque instant la position du bâti mobile par rapport au bâti fixe et, pendant la première phase d'étincelage, on asservit en position le déplacement du bâti mobile vers le bâti fixe à la mesure d'au moins l'un des paramètres électriques de soudage, en contrôlant la vitesse de déplacement du bâti mobile selon une loi dynamique déterminée en fonction des caractéristiques structurelles et dimensionnelles des pièces à souder, de façon, d'une part, à augmenter l'intensité de soudage ($I_s$) au fur et à mesure de l'élévation de température, en augmentant progressivement la vitesse de rapprochement et, d'autre part, à limiter la vitesse de rapprochement pour éviter un court-circuit.

A cet effet, et de façon particulièrement avantageuse, on contrôle la vitesse de déplacement du bâti mobile selon une loi mathématique faisant la somme de trois termes, respectivement, un premier terme correspondant à une vitesse de base du bâti mobile proportionnelle à la tension de soudage, un second terme de limitation de la vitesse de déplacement en fonction de l'évolution de la tension de soudage, pour éviter un risque de court-circuit et un troisième terme obtenu par comparaison de la valeur mesurée à chaque instant de l'intensité du courant de soudage avec une intensité de référence dépendant des caractéristiques des pièces à souder, pour augmenter ladite intensité en accélérant le déplacement au fur et à mesure de l'augmentation de température.

Dans un mode de réalisation préférentiel la loi de contrôle de la vitesse de déplacement est de la forme :

$$v(t) = VKU_s + S\,(KU_s - U_p) + \Gamma \int (I_{ref} - I_s)dt \qquad (1)$$

dans laquelle :

- • v(t) est la vitesse instantanée du mors mobile
- • $VKU_s$ est une vitesse de base proportionnelle à la tension de soudage
- • S est un coefficient de sensibilité permettant de moduler la correction de vitesse
- • K est le rapport de transformation entre un circuit primaire d'alimentation et le circuit secondaire de soudage
- • $U_s$ est la tension secondaire de soudage, mesurée à chaque instant
- • $U_p$ est la tension primaire d'alimentation
- • $I_s$ est la valeur mesurée à chaque instant de l'intensité du courant de soudage
- • $I_{ref}$ est une valeur de référence de l'intensité du courant de soudage, dépendant des pièces à souder
- • $\Gamma$ est un gain de régulation de l'accélération.

Selon une autre caractéristique avantageuse, pendant la seconde phase de forgeage, on réalise une régulation en position du déplacement du bâti mobile de façon à commander hydrauliquement et sans risque de rebond, l'arrêt progressif du bâti mobile après rapprochement des mors sur la longueur de forgeage.

De préférence, pour le forgeage, on commande, en un temps très court, le rapprochement des mors mobiles vers les mors fixes à une vitesse de déplacement contrôlée suivant une loi de variation continue comprenant une accélération brutale suivie d'un ralentissement progressif jusqu'à l'arrêt des mors mobiles dans une position correspondant à une longueur de forgeage prédéterminée.

L'invention couvre également un dispositif de contrôle du fonctionnement d'une machine de soudage par étincelage comprenant :

- des moyens de mesure en continu d'un ensemble de paramètres électriques de soudage comportant au moins la tension et l'intensité du courant de soudage passant entre les deux paires de mors,
- des moyens de mesure, à chaque instant, de la position relative des mors mobiles par rapport aux mors fixes,
- des moyens de régulation en position du déplacement du bâti mobile à partir d'au moins l'une des mesures effectuées, avec contrôle en temps réel de la vitesse de rapprochement des extrémités des deux pièces.

Les moyens de déplacement du bâti mobile par rapport au bâti fixe comprenant au moins un vérin hydraulique associé à un circuit d'alimentation, le fonctionnement dudit vérin est contrôlé par un organe de réglage du débit hydraulique commandé par un régulateur selon au moins une loi dynamique en fonction de l'évolution du processus de soudage.

De façon particulièrement avantageuse, le régulateur comporte une unité de calcul dans laquelle est mise en mémoire au moins une loi de déplacement relatif des pièces à souder compte tenu des caractéristiques structurelles et dimensionnelles de celles-ci, ladite unité de calcul recevant des signaux représentatifs, d'une part de la position à chaque instant du bâti mobile par rapport au bâti fixe et, d'autre part, de l'évolution en temps réel d'au moins l'un des paramètres électriques de soudage.

Dans un mode de réalisation préférentiel, le régulateur est associé à deux boucles fermées de régulation en cascade, respectivement une boucle primaire de régulation de la position relative du bâti mobile et une boucle principale d'établissement d'une référence de position en fonction de l'évolution d'au moins l'un des paramètres électriques de soudage selon au moins une loi dynamique de déplacement mise en mémoire dans l'unité de calcul.

Par ailleurs, les moyens de contrôle en position, selon l'invention, des déplacements du bâti mobile, permettent de contrôler les conditions de solidification de la soudure, d'obtenir une température optimale pour le rabotage et, même de réaliser un recuit entre les mors à l'issue du rabotage, pour effectuer un post-traitement de la soudure.

Mais l'invention couvre également d'autres caractéristiques avantageuses qui apparaîtront dans la description qui va suivre d'un mode de réalisation particulier, donné à titre d'exemple et illustré par les dessins annexés.

La figure 1 est une vue schématique, en coupe longitudinale, d'une machine de soudage par étincelage.

La figure 2 est un schéma du dispositif de régulation numérique de la commande du déplacement des mors mobiles.

La figure 3 est un schéma analogique équivalent.

La figure 4 représente un enregistrement des principaux paramètres électriques de soudage pendant la phase d'étincelage.

La figure 5 est un diagramme espace/temps montrant le déplacement des mors mobiles pendant la phase de forgeage.

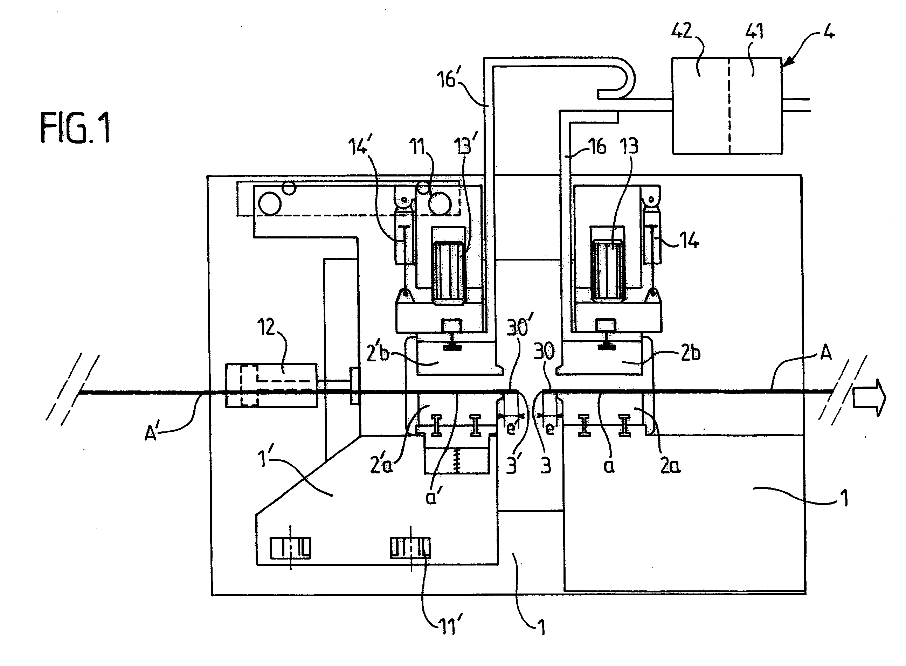

Sur la figure 1 on a représenté, très schématiquement, l'ensemble d'une machine à souder en bout par étincelage comprenant un bâti fixe 1 et un bâti mobile 1' entre lesquels défile une bande métallique portée par des tables à rouleaux non représentées qui définissent un plan sensiblement horizontal de défilement.

Pour maintenir la continuité du défilement, l'extrémité arrière, dans le sens de défilement, d'une première bande A doit être soudée en bout sur l'extrémité avant d'une seconde bande A'. A cet effet, le défilement est arrêté et les deux bandes sont positionnées dans la position représentée sur la figure 1.

Dans le mode de réalisation représenté, le bâti mobile 1' est déplaçable par translation et, à cet effet, il est porté par des galets de suspension 11 à axes horizontaux et guidé latéralement par des galets 11' à axes verticaux, de façon à coulisser parallèlement à l'axe longitudinal de défilement des bandes A, A', sous l'action de deux vérins hydrauliques 12 dont le corps est fixé sur le bâti fixe 1 et dont la tige prend appui sur le bâti mobile 1', lesdits vérins étant placés de part et d'autre de la bande et fonctionnant en synchronisme. Bien entendu, on pourrait aussi utiliser un vérin unique placé dans le plan médian longitudinal de la machine.

Sur le bâti fixe 1 est montée une pince de serrage comprenant une paire de mors, respectivement un mors inférieur 2a dont la partie supérieure est placée sensiblement dans le plan horizontal P de défilement des bandes A, A' et un mors supérieur 2b qui peut se déplacer verticalement sous l'action d'au moins un vérin de serrage 13. Le vérin 13 peut être à simple effet, le mors supérieur 2b étant relevé par un ou deux vérins 14 qui permettent de maintenir la pince 2 ouverte pour le passage et la mise en place de la bande A.

De la même façon, le bâti mobile 1' porte une pince 2' constituée de deux mors de serrage actionnés par des vérins de serrage 13' et de relevage 14'.

D'une façon générale, une telle machine peut être incorporée à une installation de traitement de bandes métalliques qui défilent, le long du plan P, entre les mors des deux pinces 2, 2', celles-ci étant maintenues ouvertes, en fonctionnement normal, par les vérins 14, 14'.

Lorsque l'on doit souder deux bandes successives, on arrête tout d'abord le défilement de la première bande A et l'on serre la pince 2 sur la partie arrière (a) de celle-ci, puis l'on coupe un bord arrière 3 parfaitement rectiligne au moyen d'une cisaille non représentée.

De la même façon, on fait venir la seconde bande A' et, après serrage de sa partie avant (a'), entre les mors de la pince mobile 2', on coupe un bord avant 3' parfaitement parallèle au bord arrière 3 de la première bande A.

Les deux bandes A, A' sont positionnées avec précision de façon à régler une distance de porte-à-faux, respectivement e, e' entre chaque bord cisaillé 3, 3' et l'extrémité des mors de la pince correspondante 2, 2'. Les deux pinces 2, 2' sont alors serrées sur les parties a, a' des deux bandes A, A'.

Ce réglage des longueurs de porte-à-faux, peut être réalisé après le cisaillage, au moyen d'une cale calibrée mais on peut aussi cisailler simultanément les deux bandes et régler en même temps les porte-à-faux, de la façon indiquée dans le brevet français n°2756504 déjà cité. Après réglage et serrage des deux pinces 2, 2', le vérin 12 est alimenté de façon à commander l'avancement du bâti mobile 1' pour mettre en contact les bords opposés 3, 3' des deux bandes A, A' maintenues serrées entre les pinces 2, 2'.

Les mors des deux pinces 2, 2' sont réalisés en cuivre conducteur et sont reliés aux deux pôles de la source de courant électrique 4. Les deux bandes A, A' sont ainsi mises sous tension pendant la phase d'étincelage qui, de la façon indiquée plus haut, provoque le chauffage à haute température des extrémités en porte-à-faux 30, 30' des deux bandes, à proximité des deux bords en contact 3, 3'.

D'une façon générale, la source de courant électrique comprend un transformateur 4 ayant un primaire 41 relié au secteur et un secondaire 42 relié aux mors des deux pinces 2, 2', respectivement par un jeu de barres 16, 16'.

L'invention peut s'appliquer à toute machine de soudage par étincelage, alimentée en courant alternatif ou continu. Toutefois, comme on le verra plus loin, une alimentation en courant continu modulé, telle que décrite dans le brevet US-6429398 de la même société, serait particulièrement avantageuse pour la mise en oeuvre de l'invention.

Dans ce cas, le transformateur est associé à un redresseur et à des moyens de modulation continue de la tension appliquée entre les mors 2, 2', en fonction de la nature du métal et des dimensions des pièces A, A' à souder.

Par ailleurs, la structure et le fonctionnement d'une telle machine de soudage par étincelage sont décrits en détail dans le brevet français n°2756504 auquel on peut se reporter en cas de besoin.

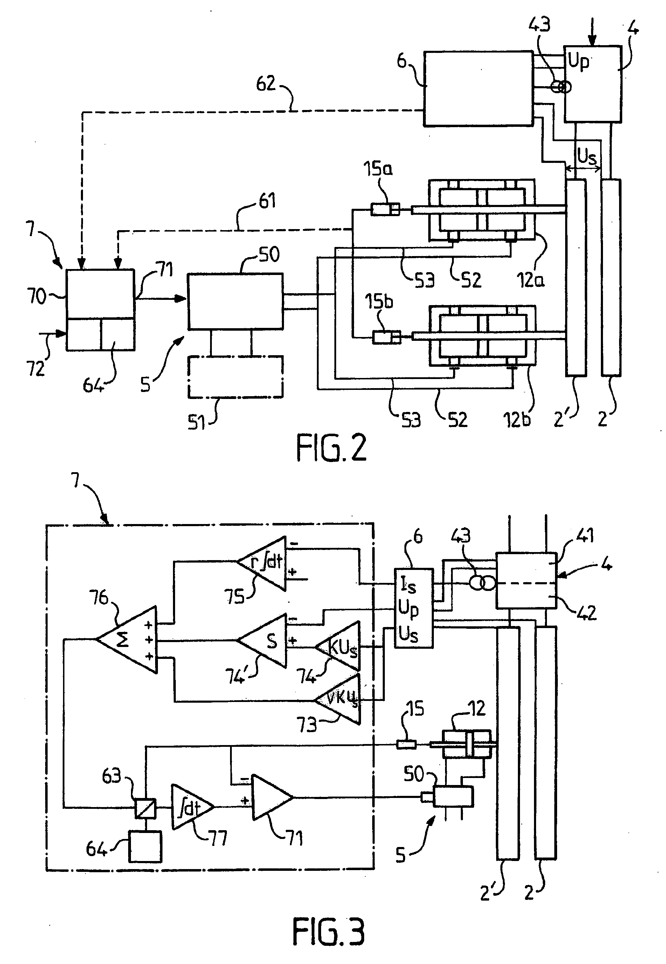

Selon l'invention, on réalise une régulation en position du déplacement du bâti mobile de la façon représentée schématiquement sur les figures 2 et 3.

Dans le mode de réalisation représenté, le déplacement de la pince mobile 2' par rapport à la pince fixe 2 est commandé par deux vérins hydrauliques 12a, 12b à double effet, alimentés à partir d'une centrale hydraulique 51 par un circuit hydraulique 5 comprenant un organe de réglage du débit d'alimentation des vérins tel qu'une servo-valve 50 raccordée aux deux chambres de chaque vérin 12a, 12b par des tuyauteries 52, 53 ayant des longueurs égales afin de garantir un déplacement en synchronisme des deux vérins 12a, 12b.

Les deux vérins 12a, 12b sont associés, respectivement, à deux capteurs de position 15a, 15b qui émettent un signal représentatif de la position relative, à chaque instant, des mors mobiles 2' par rapport au mors fixes 2.

Comme on l'a indiqué, les deux paires de mors 2, 2' sont reliées respectivement, par des barres conductrices 16, 16', aux deux bornes d'un générateur de puissance tel qu'un transformateur 4 comprenant un circuit primaire 41 et un circuit secondaire 42.

Un ensemble de capteurs 6 mesure les paramètres électriques du processus de soudage et, en particulier, l'intensité $I_s$ et la tension $U_s$ du courant électrique passant entre les mors 2, 2' et la tension d'alimentation $U_P$ du générateur de puissance 4.

De préférence, la tension du courant de soudage $U_s$ est mesurée directement sur les mors de soudage 2, 2' par des prises fixées sur leurs extrémités et non pas sur les barres conductrices 16, 16' de l'alimentation de puissance.

De façon connue, l'intensité Is dans le circuit d'alimentation des mors, peut être mesurée au moyen d'un transformateur d'intensité 43.

Les signaux de mesure correspondants, émis par les capteurs 6, sont affichés sur un ensemble électronique de contrôle formant un régulateur 7 comprenant une unité de calcul 70 associée à deux boucles imbriquées de régulation, respectivement une boucle fermée primaire 61 de régulation de position et une boucle fermée principale 62 pour l'établissement d'une consigne de position tenant compte du déroulement du processus de soudage.

L'unité de calcul 70 est programmée de façon à établir, à partir des signaux de mesure ainsi reçus et en fonction des caractéristiques des pièces à souder, une consigne de vitesse qui est intégrée pour fournir une référence de position. Celle-ci est comparée avec la mesure instantanée de position fournie par la boucle primaire 61 de façon à élaborer, sur la sortie 71 du régulateur, un signal de commande de la servo-valve 50 pour le contrôle en position du déplacement des mors mobiles 2'.

Cette consigne de référence de vitesse est élaborée de deux façons différentes pour chaque phase du procédé, respectivement de chauffage et de forgeage, en fonction des caractéristiques structurelles et dimensionnelles des deux pièces à souder A, A' qui sont affichées, avant le démarrage de la soudure, sur une entrée 72 du régulateur, soit manuellement, au moyen d'un clavier ou tout autre moyen à la disposition de l'opérateur, soit depuis un autre calculateur de gestion de la production, en particulier dans le cas d'une installation de traitement en continu de bandes métalliques.

Les techniques de régulation, en particulier numérique, sont bien connues et ne nécessitent pas une description détaillée. A titre d'exemple, la figure 3 donne l'équivalent analogique d'un régulateur 7 pour la mise en oeuvre de l'invention.

L'alimentation électrique des mors fixes 2 et mobiles 2' est assurée, habituellement, par un transformateur 4 ayant un circuit primaire 41 et un circuit secondaire 42 avec un rapport de transformation K.

Comme on l'a indiqué plus haut, l'invention peut s'appliquer à une machine alimentée en courant alternatif ou continu. Cependant, du fait que la régulation est effectuée à partir de mesures des paramètres électriques, une alimentation en courant continu modulé, du type décrit dans le brevet US-6429398 serait particulièrement avantageuse car elle permettrait d'éliminer la partie selfique liée à la fréquence du réseau et, ainsi, de prendre en compte uniquement les variations liées au phénomène d'étincelage, les mesures n'étant plus parasitées par les phénomènes d'inductance liés à la fréquence du réseau d'alimentation.

Pendant la phase d'étincelage, qui sert au chauffage des extrémités 30, 30' des deux pièces, la tension primaire d'alimentation $U_p$, la tension secondaire du courant de soudage $U_s$ et son intensité $I_s$ sont mesurées par un ensemble de capteurs électriques 6 et les signaux correspondant sont introduits, par la boucle principale de régulation 62, dans un régulateur 7 sur lequel sont affichées, d'autre part, les caractéristiques structurelles et dimensionnelles des pièces à souder.

L'unité de calcul 70 est programmée de façon à élaborer, à partir de ces données, les différents termes de la loi de déplacement permettant d'établir une consigne de référence pour la boucle primaire de régulation de position 61.

Comme on l'a indiqué, on règle tout d'abord, de façon connue, les longueurs e, e' des parties 30, 30' en porte-à-faux des deux bandes A, A', puis l'on commande le serrage sur les deux bandes des mâchoires qui sont alors mises sous tension. La servo-valve 50 commande alors l'alimentation des vérins 12 et le bâti mobile commence à se déplacer vers le bâti fixe 1 à une vitesse qui, d'une façon générale, est proportionnelle à la tension secondaire et peut donc s'écrire $VKU_s$.

Ce premier terme de la loi de déplacement (1) est élaboré par un amplificateur 73 sur lequel est appliqué le signal correspondant à la tension secondaire $U_s$ et qui détermine une vitesse de base $VKU_s$ pour le déplacement du bâti mobile.

D'une façon générale, la valeur instantanée de la tension secondaire $U_s$ est comprise, en permanence, entre la tension à vide $U_v$ et la tension de court-circuit $U_0$.

En effet, au moment du démarrage, lorsque les mors 2, 2' sont mis en tension, les bords en regard 3, 3' des deux bandes sont écartés et la tension secondaire $U_s$ est égale à la tension à vide $U_v$.

En revanche, lorsque les bords des tôles 3, 3' sont appliqués sur toute leur longueur, il se produit un court circuit.

On a donc, en permanence :

$$Uv \geq Us \geq U_0 \qquad (2)$$

Comme on l'a indiqué, le principe du soudage par étincelage consiste à rapprocher les tôles de façon que, compte tenu des irrégularités inévitables des bords cisaillés 3, 3', il se produise une série de ponts de court-circuit avec projection d'étincelles, qui réalisent le chauffage des extrémités 30, 30'.

Les étincelles ainsi éjectées hors de la zone de contact consomment une partie du métal qui doit être compensée de façon à maintenir les bords 3, 3' suffisamment en contact pour entretenir la formation des ponts de court-circuit nécessaires au chauffage. Il faut donc maintenir, pendant la phase d'étincelage, une certaine vitesse de rapprochement du bâti mobile 1' vers le bâti fixe 1.

Cependant, cette vitesse doit aussi être limitée pour éviter une application l'un sur l'autre des deux bords 3, 3', sur toute leur longueur, ce qui provoquerait un court-circuit franc.

Selon l'invention, le régulateur 7 commande le rapprochement des mors mobiles 2' vers les mors fixes 2 en suivant une loi de déplacement qui permet de maintenir un contact juste suffisant pour le chauffage, tout en évitant un court-circuit total.

Ce résultat est obtenu en prenant comme paramètre directeur la tension de soudage.

En effet, si les bords en regard 3, 3' sont trop éloignés, la valeur de la tension secondaire Us se rapproche de la valeur à vide $U_v$ et le chauffage risque d'être insuffisant ou, même, nul. Il faut donc augmenter la vitesse de rapprochement pour maintenir une répartition suffisante des micro-contacts.

Inversement, si les bords 3, 3' sont trop rapprochés, la tension secondaire Us se rapproche de la tension de court-circuit $U_0$ et il faut ralentir le déplacement des mors mobiles 2' avant le contact complet.

Pour cela, selon le schéma de la figure 3, la valeur de la tension secondaire $U_s$, multipliée par le rapport de transformation K, par exemple au moyen d'un amplificateur 74, est comparée avec la tension primaire Up dans un comparateur 74' qui élabore un signal de correction de la vitesse de déplacement, en tenant compte d'un coefficient de sensibilité S permettant de moduler cette correction afin d'éviter les à-coups.

Il est à noter que, de la sorte, on prend comme référence la valeur de la tension primaire $U_p$ et la régulation ne risque pas d'être influencée par une variation de la valeur de la tension du réseau d'alimentation.

Cependant, en raison de l'inertie thermique des mors de serrage 2, 2', les calories produites par les ponts de court-circuit sont évacuées, en partie, à l'arrière des bords en contact et cette perte thermique est proportionnelle à la température. Si la vitesse de rapprochement restait constante pendant l'étincelage, les tôles seraient donc chauffées uniquement le long des bords en contact 3, 3', et les parties en porte-à-faux 30, 30' n'atteindraient pas une température suffisante pour l'effet de forgeage recherché.

Il est donc nécessaire de compenser ces pertes en augmentant la puissance de chauffage et, par conséquent, l'intensité, au fur et à mesure de l'élévation de température, mais en restant, cependant, à la limite du court-circuit.

Étant donné que, pendant le chauffage, on s'efforce de maintenir sensiblement constante la tension secondaire $U_s$ qui est égale au produit de l'intensité par la résistance, cette augmentation de l'intensité et, par conséquent, de la puissance de chauffe, va être obtenue, selon l'invention, en augmentant la vitesse de rapprochement des bords en contact 3, 3', et, par conséquent, le nombre de point de formation d'étincelles, ce qui provoque une diminution de la résistance apparente de contact des deux tôles.

D'une façon générale, comme la résistance de contact dépend de la nature et des dimensions des pièces à souder, on peut, par exemple à partir d'essais préalables, se fixer un profil de variation de l'intensité au cours de l'étincelage, défini par une intensité de référence $I_{ref}$ et un taux de variation. Par différence avec la valeur instantanée $I_s$ de l'intensité, on peut alors calculer un terme d'accélération permettant de se rapprocher du courant à atteindre à chaque instant.

Dans le mode de réalisation équivalent, illustré par la figure 3, la différence $(I_{ref}-I_s)$ ainsi mesurée est intégrée par d'un amplificateur opérationnel 75 avec un gain $\Gamma$ permettant, d'une part de tenir compte de la nature des pièces à souder et, d'autre part, de moduler l'effet du terme d'accélération ainsi obtenu sur la variation globale de la vitesse de déplacement.

Au cours de la phase d'étincelage, le régulateur 7 élabore donc les trois termes de la loi de déplacement permettant de faire varier la vitesse instantanée v(t) selon la formule :

$$v(t) = VKU_s + S\,(KU_s - U_p) + \Gamma{\textstyle\int}(I_{ref}-I_s)dt \quad (1)$$

dans laquelle :

- v(t) est la vitesse instantanée du mors mobile
- $VKU_s$ est une vitesse de base proportionnelle à la tension de soudage
- S est un coefficient de sensibilité permettant de moduler la correction de vitesse
- K est le rapport de transformation entre le circuit primaire d'alimentation et le circuit secondaire de soudage
- $U_s$ est la tension secondaire de soudage, mesurée à chaque instant
- $U_p$ est la tension primaire d'alimentation
- $I_s$ est la valeur mesurée à chaque instant de l'intensité du courant de soudage
- $I_{ref}$ est une valeur de référence de l'intensité du courant de soudage, dépendant des pièces à souder
- $\Gamma$ est un gain de régulation.

Comme on l'a indiqué, la figure 3 donne un équivalent analogique permettant d'analyser le principe de la régulation mais il est intéressant d'utiliser une régulation numérique permettant de réaliser les mêmes fonctions en suivant, de préférence, la loi dynamique de déplacement (1) donnée ci-dessus.

Au démarrage, lorsque les extrémités 3, 3' des deux tôles sont écartées, la tension secondaire $U_s$ est égale à la tension à vide $U_v$, elle même proportionnelle à la tension primaire $U_p$ dans le rapport de transformation K.

Ensuite, le régulateur 7 détermine une vitesse de base $VKU_s$ qui est progressivement accélérée selon le troisième terme de l'équation, de façon à augmenter l'énergie de chauffage mais en maintenant la tension secondaire $U_s$ sensiblement constante ou, du moins, dans un intervalle déterminé, grâce au deuxième terme de l'équation.

De préférence, le terme d'accélération n'intervient qu'après une course d'amorçage pour assurer un chauffage homogène sur toute la largeur de la bande.

Comme le montre le schéma équivalent de la figure 3, les signaux correspondant aux trois termes de l'équation (1), élaborés de la façon indiquée ci-dessus, sont traités par un sommateur 76 qui émet un signal de contrôle de la vitesse v(t).

Un intégrateur 77 permet d'élaborer la référence de position du mors mobile 2' calculée en fonction de la vitesse instantanée v(t) ainsi calculée et de la position initiale $y_0$ du mors mobile 2', selon l'équation :

$$y = y_0 + {\textstyle\int} v(t) \quad\quad (3)$$

Cette référence de position est affichée sur un comparateur 71 qui, par la boucle primaire de régulation 61, reçoit le signal de position instantanée émis par le ou les capteurs 15 et, en suivant la loi dynamique de déplacement (1), élabore le signal de commande de la servo-valve 50 afin de contrôler le déplacement des mors mobiles 2' à la vitesse ainsi déterminée.

Comme on l'a indiqué, les gains V, K, S, des différents organes du régulateur 7, ainsi que l'intensité de référence

$I_{ref}$ sont déterminés, par exemple par des essais, en fonction des pièces à souder.

Cependant, le nombre d'essais nécessaires pour couvrir une gamme de production peut être limité car le système de régulation selon l'invention permet facilement d'optimiser les réglages pour d'autres formats de tôles et d'autres types d'acier.

En effet, étant donné que les paramètres de contrôle de la régulation sont des grandeurs électriques, on peut, à partir des réglages prévus pour un certain type de tôles, prévoir de nouvelles valeurs de référence en fonction des caractéristiques électriques du matériau à souder et il en est de même en cas de changements dimensionnels.

Du fait que l'on contrôle, à chaque instant les paramètres électriques qui déterminent l'échauffement, on peut réaliser la soudure dans les meilleures conditions, en déterminant, pour chaque cas, un profil optimal de variation de la vitesse de rapprochement et, par conséquent, de l'intensité de soudage. Il est ainsi possible de réduire au minimum le temps d'étincelage sans affecter la qualité de la soudure.

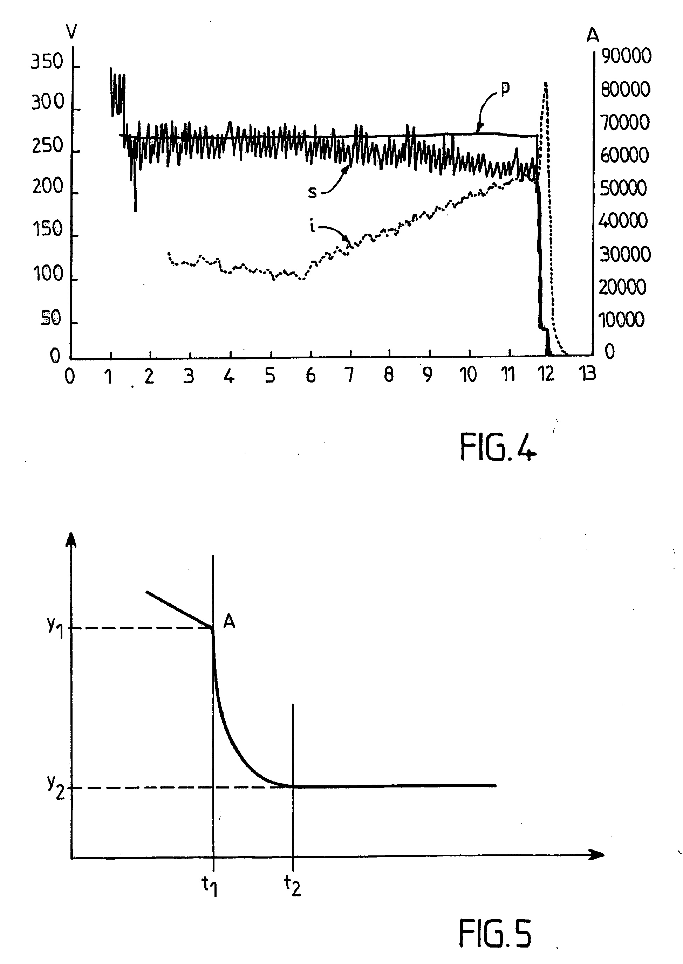

A titre d'exemple, la figure 4 montre la réalisation d'une soudure avec un temps d'étincelage d'environ 10 secondes.

La figure 4 est un diagramme double montrant les variations, en fonction du temps indiqué en abscisse, des tensions indiquées en volts sur l'échelle de gauche et de l'intensité de soudage indiquée en Ampères sur l'échelle de droite.

La courbe (p) représente la variation de la tension primaire Up qui reste sensiblement constante pendant toute la phase d'étincelage et descend brutalement, en raison du court-circuit, lorsque les tôles sont appliquées l'une vers l'autre pour le forgeage, c'est à dire aux alentours de la 12ème seconde.

La courbe (s) représente la variation, au cours du temps, de la valeur $KU_s$ de la tension secondaire affectée du coefficient de transformation et montre que cette valeur subit une certaine fluctuation du fait de l'instabilité relative du phénomène d'étincelage mais varie, cependant, autour d'une valeur moyenne sensiblement constante pendant toute la phase d'étincelage, c'est à dire jusqu'à la 11ème seconde.

La courbe (i) représentée par des points espacés sur la figure 4, montre que l'intensité secondaire Is augmente fortement pendant plus de la moitié de la course d'étincelage alors que, comme on vient de le voir, la tension secondaire reste sensiblement constante. Cela signifie qu'on a bien évité le court-circuit tout en accélérant le déplacement des mors mobile afin d'augmenter la puissance de chauffe.

Le système de régulation qui vient d'être décrit permet donc de contrôler l'évolution des paramètres électriques afin d'obtenir, en un temps optimal, la température souhaitable pour le forgeage.

Au moment du forgeage, c'est à dire à la 12ème seconde, l'intensité croît brutalement au moment du court-circuit puis diminue et s'annule avec la tension.

Cependant, après la réalisation de la course de forgeage, il est préférable, comme on le verra plus loin, de maintenir une faible tension entre les mors, afin de contrôler la vitesse de refroidissement de la zone affectée thermiquement jusqu'à solidification du métal.

Il est à noter que le contrôle en position, selon l'invention, du bâti mobile, permet en outre, de contrôler le processus de forgeage.

En effet, dans la mesure où le chauffage a été parfaitement contrôlé pendant la phase d'étincelage, on peut déterminer la quantité de métal consommée pendant cette phase et la longueur restante nécessaire de porte-à-faux pour réaliser le forgeage, c'est à dire la position relative des mors mobiles 2' par rapport aux mors fixes 2, à partir de laquelle on peut commander le rapprochement rapide des mors fixes sur la course de forgeage nécessaire pour l'interpénétration des tôles dans leur partie chauffée.

Un commutateur 63 placé en amont de l'intégrateur 77 et commandé par le capteur de position 15 permet, à la fin de la course prévue pour l'étincelage, de commander une accélération brutale, pour le forgeage, du bâti mobile 1', en suivant un profil de variation de vitesse déterminé par un générateur 64.

Ce profil de variation de vitesse est du type représenté, à titre d'exemple, sur la figure 5 qui montre la variation, en fonction du temps indiqué en abscisse, de la position des mors mobiles 2' indiquée en ordonnée.

Comme on l'a indiqué plus haut, l'asservissement en position du bâti mobile 2' au moyen du régulateur 7 permet d'arrêter l'étincelage à un instant $(t_1)$ dans une position $(y_1)$ du bâti mobile pour laquelle, après consommation du métal dans la phase d'étincelage, il reste une longueur de porte-à-faux au moins égale à la course de forgeage nécessaire.

A partir de cet instant $(t_1)$, le programme mis en mémoire dans le générateur 64 détermine une accélération brutale du déplacement du bâti mobile, suivie d'un freinage progressif avec arrêt du bâti mobile dans la position $(y_2)$ pour laquelle la vitesse de déplacement est nulle.

Ainsi, pendant toute la course de forgeage égale à la différence $(y_1 - y_2)$, le déplacement des mors mobiles 2' est géré par le calcul en temps réel de la consigne de position de façon à suivre une trajectoire espace/temps du type représenté sur la figure 5.

Il est ainsi possible d'envoyer tout d'abord le plus grand débit possible dans le vérin 12 de façon à accélérer au maximum le déplacement des mors mobiles 2' et, malgré la très grande inertie du bâti mobile 1' qui peut avoir une masse de 50 à 100 tonnes, de réaliser le forgeage en un temps extrêmement court ($t_2$ - $t_1$), par exemple 150 mil/ secondes, en freinant progressivement le déplacement de façon à réaliser exactement la course de forgeage ($y_1$ - $y_2$) souhaitée.

Ce freinage progressif et précis permet d'éviter un inconvénient des machines connues, dans lesquelles le déplacement du bâti mobile doit être arrêté par une butée mécanique qui peut, par rebond, provoquer un léger mouvement de recul du mors mobile, préjudiciable à la qualité de la soudure en cours de solidification.

Dans l'invention, au contraire, le contrôle en position du déplacement du bâti mobile joue le rôle d'une butée hydraulique avec un effet d'amortissement, en évitant tout risque de rebond.

Par ailleurs, le contrôle simultané de la position des mors mobiles et de l'évolution des paramètres électriques permet de contrôler la distance entre les mors mobiles pendant le temps nécessaire à la solidification de la soudure et, en même temps, de faire circuler un courant en court-circuit afin de réaliser, par effet de Joule, un refroidissement contrôlé de la zone affectée thermiquement. L'invention permet ainsi d'obtenir une soudure de qualité optimale, dans des conditions adaptées à la nuance du matériau à souder.

En cas de besoin, un refroidissement complémentaire par aspersion d'air permet d'obtenir en fin de cycle, une température optimale pour l'opération suivante.

En effet, ce type de soudure entraîne la formation d'un bourrelet qui doit être éliminé par rabotage, par exemple de la façon décrite dans le brevet français n°2756504 déjà cité, et il est intéressant, par le refroidissement contrôlé de la soudure, d'atteindre rapidement une température pour laquelle cette opération se réalise plus facilement et plus rapidement.

De plus, le dispositif selon l'invention permet facilement de contrôler tous les déplacements du bâti mobile en appliquant des consignes caractéristiques des positions que doit occuper le mors mobile pour l'exécution de certaines phases particulières du cycle de la machine, chaque position pouvant être atteinte à partir de la position précédente en contrôlant une vitesse de déplacement programmée, selon l'équation (3) ci-dessus.

Par conséquent, même si l'invention est prévue essentiellement pour contrôler les déplacements du bâti mobile pendant les phases d'étincelage et de forgeage, un tel contrôle en position peut également être avantageux pour les autres phases du processus de raccordement de deux bandes successives, chaque fois qu'il est nécessaire de réaliser un positionnement précis des mors de serrage 2, 2' et des deux bandes, par exemple pour le cisaillage de leurs extrémités, le réglage des longueurs de porte-à-faux et le rabotage du cordon de soudure.

En effet, comme on l'a indiqué plus haut, les distances de porte-à-faux e, e' doivent être limitées et sont simplement suffisantes pour permettre l'étincelage et le forgeage. Le contrôle en position du bâti mobile permet, à la fin du cycle de soudage proprement dit, de reculer les mors mobiles de la distance juste nécessaire pour le passage de l'outil de rabotage qui peut, avantageusement, être guidé sur le bâti fixe, de la façon décrite dans le brevet FR-2756504 déjà cité.

Mais il est apparu que la possibilité de contrôle, selon l'invention, des déplacements relatifs des mors de serrage pouvait encore présenter d'autres avantages.

On sait, en effet, qu'il est parfois souhaitable, après la soudure de deux bandes successives, de soumettre la zone affectée thermiquement à un traitement thermique tel qu'un recuit.

C'est le cas, notamment de certains alliages présentant des risques de fragilité, comme les aciers à haute teneur en carbone ou en silicium, magnésium, etc...

En outre, certains aciers à très haute limite élastique, en particulier les aciers dits « TRIP », nécessitent un tel traitement.

Jusqu'à présent, lorsque l'on souhaitait réaliser un recuit de la soudure, la machine de soudage devait être associée à un dispositif annexe constitué, par exemple, d'un four électrique à induction. Une telle disposition entraîne un investissement non négligeable et, en outre, nécessite le transfert, après soudure, de la partie soudée, dans ce four à induction qui est placé sur le trajet de la bande, à une certaine distance en aval de la machine de soudage.

Dans une installation de traitement en ligne, il faut donc, après la soudure et le rabotage, utiliser les moyens de commande du défilement de la bande pour faire avancer la zone soudée jusqu'au four puis arrêter de nouveau le défilement et procéder au traitement thermique. Le temps global d'arrêt de la bande est donc considérablement augmenté et peut, même être doublé, le temps de recuit étant, pratiquement, du même ordre que le temps nécessaire au soudage.

Or, il est apparu que, grâce à l'invention, il serait possible d'éviter de tels déplacements de la bande et, par conséquent, d'améliorer la productivité de l'installation en réalisant le traitement de recuit à l'intérieur même de la machine de soudage, ce qui permet, d'une part, de faire l'économie d'un four et, d'autre part, de réduire considérablement le temps d'arrêt de la bande.

On a constaté, en effet que, grâce à la puissance électrique installée sur la machine pour le soudage et à la possibilité de contrôler le refroidissement de la façon indiquée plus haut, il serait possible de réaliser un traitement de recuit efficace de la zone soudée, l'échauffement nécessaire étant produit par effet Joule en faisant passer la puissance électrique, en court-circuit, dans la bande, par l'intermédiaire des mors.

Pour obtenir une élévation de température suffisamment importante et rapide de la zone soudée, il faut, cependant, éloigner le plus possible de celle-ci les deux mors qui servent à transmettre le courant mais sont des pièces massives susceptibles d'absorber une partie importante de la chaleur produite. Le contrôle en position, selon l'invention, permet de réaliser une telle opération chaque fois que la nature du métal soudé justifie un post-traitement de recuit. L'invention permet donc d'ajouter un cycle de recuit aux phases d'étincelage, de forgeage et de rabotage décrites précédemment.

Comme indiqué dans le brevet FR-2756504 déjà cité, pendant le rabotage, les deux paires de mors sont serrées de façon à maintenir la zone soudée mais il est avantageux que l'outil de rabotage soit guidé sur le bâti fixe, la soudure étant, donc, très près des mors fixes.

A l'issue du rabotage, on va donc desserrer les mors fixes en laissant serrés les mors mobiles et reculer le bâti mobile d'une distance correspondant à environ la moitié de la valeur de l'ouverture maximale de la machine. La partie soudée, qui est tirée en arrière par les mors mobiles, s'écarte donc de cette distance des mors fixes.

On resserre alors les mors fixes 2a, 2b sur la bande amont A se trouvant dans cette position et l'on desserre les mors mobiles 2'a, 2'b, puis l'on ouvre la machine au maximum en reculant encore le bâti mobile 1' et l'on resserre les mors mobiles 2'a, 2'b sur la bande aval A'. On a ainsi positionné la soudure sensiblement au milieu de la distance entre les deux paires de mors 2, 2' qui sont alors écartés au maximum, ce qui permet de limiter les pertes thermiques par conduction dans les mors lorsque ceux-ci sont alimentés pour faire passer le courant.

On peut ainsi réaliser un recuit de la zone soudée qui est chauffée par l'effet Joule du courant passant entre les mors, ce courant pouvant être modulé grâce aux dispositifs de contrôle de la puissance électrique dont la machine est nécessairement équipée pour le contrôle de l'étincelage. Il est ainsi possible de moduler l'effet du courant en intensité délivrée et dans le temps, en tenant compte de la nature du métal soudé, afin de réaliser l'effet de recuit souhaité, par un échauffement suffisamment intense et rapide puis un refroidissement contrôlé.

L'invention permet donc, sans modification de la machine et sans adjonction d'un four à induction, d'effectuer un post-traitement de recuit de la soudure chaque fois que la nature du métal le justifie, en ajoutant simplement un cycle de recuit aux opérations d'étincelage, de forgeage et de rabotage réalisées dans une machine classique.

Il est à noter, d'ailleurs, que cette séquence supplémentaire de recuit sera encore plus efficace et plus facile à contrôler si la machine de soudage est alimentée par un courant continu modulable, de la façon décrite dans le brevet US-6429398 cité plus haut. Une alimentation en courant continu permet en effet, de délivrer une puissance instantanée beaucoup plus élevée qui peut être facilement modulée, par exemple au moyen d'un dispositif à thyristors du type décrit dans ce brevet antérieur et permet ainsi, d'une part de chauffer la zone soudée de façon quasi instantanée et, d'autre part de contrôler le refroidissement.

L'invention permet ainsi d'obtenir une soudure ayant des caractéristiques optimales pour toutes les opérations suivantes et d'assurer le bon déroulage des bandes raccordées, y compris lors d'une opération de laminage, dans le cas où la machine de soudage équipe une ligne de laminage continu.

Bien entendu, l'invention ne se limite pas aux détails du mode de réalisation qui vient d'être décrit à titre de simple exemple mais couvre au contraire toutes les variantes ou les perfectionnements restant dans le cadre de protection défini par les revendications.

Par exemple, s'il est avantageux d'utiliser une régulation numérique en suivant la loi de déplacement indiquée plus haut on pourrait, évidemment, définir d'autres lois de déplacement adaptées, par exemple, à certains type de matériaux. On pourrait aussi utiliser d'autres moyens de régulation, par exemple une régulation analogique du type indiqué schématiquement, par équivalence, sur la figure 3, l'utilisateur pouvant choisir, pour la mise en oeuvre de l'invention, les composants électroniques ou hydrauliques les mieux adaptés aux types de machines utilisées pour la soudure.

D'ailleurs, l'invention a été décrite pour le cas de bandes métalliques et d'une machine de soudage du type décrit dans le brevet français n°2756504 déjà cité mais elle peut évidemment s'appliquer à d'autres pièces à souder et à tout autre type de machine de soudage par étincelage avec déplacement relatif l'une vers l'autre des extrémités des deux pièces à souder.

Les signes de référence insérés après les caractéristiques techniques mentionnées dans les revendications, ont pour seul but de faciliter la compréhension de ces dernières et n'en limitent aucunement la portée.

**Revendications**

1.  Procédé de contrôle du processus de soudage en bout, par étincelage, de deux pièces métalliques (A, A') disposées l'une après l'autre le long d'un axe longitudinal de défilement, dans une machine de soudage du type comprenant deux paires de mors de serrage (2, 2') montées respectivement sur un bâti fixe (1) et sur un bâti mobile (1') déplaçable par rapport au bâti fixe, des moyens électriques de soudage comprenant une source de courant électrique (4) à deux pôles reliés respectivement aux deux paires de mors de serrage, des moyens (13, 13') de commande du serrage des deux paires de mors (2, 2'), respectivement à proximité d'une extrémité arrière (3), dans le sens de défilement, d'une première pièce (A) et à proximité d'une extrémité avant (3') d'une seconde pièce (A'), et des moyens de commande d'un déplacement longitudinal du bâti mobile par rapport au bâti fixe (1), pour la mise en contact desdites extrémités arrière (3) et avant (3') des deux pièces (A, A') et le passage d'un courant électrique avec une tension (U) et une intensité de soudage (I), le processus de soudage étant réalisé en deux phases successives, respectivement une première phase d'étincelage pour le chauffage des extrémités en contact (3, 3') à une température de soudage, par production d'une série de micro-contacts électriques avec projection d'étincelles le long desdites extrémités, et une seconde phase de forgeage avec interpénétration des extrémités chauffées sur une longueur de forgeage, procédé dans lequel on détermine à chaque instant la valeur d'un ensemble de paramètres électriques comportant au moins la tension ($U_s$) et l'intensité $I_s$) du courant de soudage, **caractérisé par le fait que** l'on détermine à chaque instant la position du bâti mobile (1') par rapport au bâti fixe (1) et que, pendant la première phase d'étincelage, on asservit en position le déplacement du bâti mobile (1') vers le bâti fixe (1) à la mesure d'au moins l'un des paramètres électriques de soudage, en contrôlant la vitesse de déplacement (v) du bâti mobile (1') selon une loi dynamique déterminée en fonction des caractéristiques structurelles et dimensionnelles des pièces à souder (A, A'), de façon, d'une part, à augmenter l'intensité de soudage ($I_s$) au fur et à mesure de l'élévation de température, en augmentant progressivement la vitesse de rapprochement (v) et, d'autre part, à limiter la vitesse de rapprochement (v) pour éviter un court-circuit.

2. Procédé selon la revendication 1, **caractérisé par le fait que**, pendant la phase d'étincelage, on contrôle la vitesse (v) de déplacement du bâti mobile (1') selon une loi mathématique faisant la somme de trois termes, respectivement, un premier terme correspondant à une vitesse de base du bâti mobile proportionnelle à la tension de soudage ($U_s$), un second terme de limitation de la vitesse de déplacement (v) en fonction de l'évolution de la tension de soudage ($U_s$), pour éviter un risque de court-circuit et un troisième terme obtenu par comparaison de la valeur mesurée à chaque instant de l'intensité ($I_s$) du courant de soudage avec une intensité de référence ($I_{ref}$) dépendant des caractéristiques des pièces à souder (A, A'), pour augmenter ladite intensité ($I_s$) en accélérant le déplacement au fur et à mesure de l'augmentation de température.

3. Procédé selon la revendication 2, **caractérisé par le fait que** la loi de contrôle de la vitesse de déplacement est de la forme

$$v(t) = VKU_s + S(KU_s - U_p) + \Gamma \int (I_{ref} - I_s) dt \qquad (1)$$

dans laquelle :

- $v(t)$ est la vitesse instantanée du mors mobile
- $VKU_s$ est une vitesse de base proportionnelle à la tension de soudage
- S est un coefficient de sensibilité permettant de moduler la correction de vitesse
- K est le rapport de transformation entre le circuit primaire d'alimentation et le circuit secondaire de soudage
- $U_s$ est la tension secondaire de soudage, mesurée à chaque instant
- Up est la tension primaire d'alimentation
- $I_s$ est la valeur mesurée à chaque instant de l'intensité du courant de soudage
- $I_{ref}$ est la valeur de référence de l'intensité du courant de soudage, dépendant des pièces à souder
- $\Gamma$ est un gain de régulation de l'accélération.

4. Procédé de contrôle selon l'une des revendication 1,2,3, **caractérisé par le fait que**, pendant la seconde phase de forgeage, on réalise une régulation en position du déplacement du bâti mobile (1') de façon à commander hydrauliquement et sans risque de rebond, l'arrêt du bâti mobile (1') après rapprochement des mors (2, 2') sur la longueur de forgeage.

5. Procédé selon la revendication 4, **caractérisé par le fait que**, pour la seconde phase de forgeage, on commande, en un temps très court, le rapprochement des mors mobiles (2') vers les mors fixes (2) sur une course déterminée et à une vitesse de déplacement (v) contrôlée suivant une loi de variation continue comprenant une accélération brutale suivie d'un ralentissement progressif jusqu'à l'arrêt des mors mobiles (2') dans une position correspondant à une longueur de forgeage prédéterminée.

6. Procédé selon la revendication 5, **caractérisé par le fait que** l'on contrôle la distance entre les mors après la phase de forgeage, de façon à éviter toute sollicitation de la soudure pendant le temps de solidification du métal et que, en même temps, on fait circuler entre les mors, respectivement fixes (2) et mobiles (2'), serrés sur les deux pièces soudées (A, A'), un courant électrique susceptible de contrôler, par effet Joule, la vitesse de refroidissement de la zone affectée thermiquement jusqu'à solidification complète de celle-ci.

**7.** Procédé selon la revendication 6, **caractérisé par le fait que**, après solidification de la zone affectée thermiquement, celle-ci est refroidie par injection d'air jusqu'à une température optimale pour un rabotage de la soudure.

**8.** Procédé selon la revendication 7, **caractérisé par le fait que**, après rabotage de la soudure, on écarte les mors mobiles d'une distance maximale des mors fixes, en plaçant la soudure sensiblement à égale distance des deux paires de mors et l'on fait passer entre les mors un courant électrique modulé de façon à réaliser, par effet Joule, un recuit de la zone soudée, suivi d'un refroidissement contrôlé.

**9.** Procédé selon la revendication 8, **caractérisé par le fait que**, après le rabotage de la soudure, on desserre les mors fixes (2) en maintenant serrés les mors mobiles (2'), on écarte le bâti mobile (1') de la moitié environ de la distance maximale possible par rapport au bâti fixe (1) en entraînant la zone soudée, on serre les mors fixes (2) et l'on desserre les mors mobiles, on écarte le bâti mobile (1') jusqu'à la distance maximale possible par rapport au bâti fixe (1), on serre les mors mobiles (2') et l'on fait passer entre les deux paires de mors (2, 2') ainsi serrés sur les pièces soudées (A, A') un courant électrique modulé de façon à réaliser un recuit de la zone soudée.

**10.** Procédé selon l'une des revendications précédentes, **caractérisé par le fait que** les deux paires de mors (2, 2') sont alimentés en courant continu sous une tension modulée de façon continue.

**11.** Dispositif pour la mise en oeuvre du procédé de contrôle de soudage selon l'une des revendications précédentes, comprenant :

- des moyens (6) de mesure en continu d'un ensemble de paramètres électriques de soudage comportant au moins la tension ($U_s$) et l'intensité ($I_s$) du courant de soudage passant entre les deux paires de mors (2, 2'), **caractérisé en ce que** ledit dispositif comprend en outre:
- des moyens (15) de mesure, à chaque instant, de la position relative des mors mobiles par rapport aux mors fixe,
- des moyens (50, 7) de régulation en position du déplacement du bâti mobile (1') à partir d'au moins l'une des mesures effectuées, avec contrôle en temps réel de la vitesse (v) de rapprochement des mors (2, 2') de serrage des deux pièces (A, A').

**12.** Dispositif de contrôle selon la revendication 11, dans lequel les moyens de déplacement du bâti mobile par rapport au bâti fixe comprennent au moins un vérin hydraulique (12) associé à un circuit d'alimentation (5), **caractérisé par le fait que** les moyens de régulation comprennent au moins une servo-valve hydraulique (50) de contrôle de l'alimentation hydraulique des moyens (12) de commande du déplacement du bâti mobile (1') et un régulateur (7) de commande de la servo-valve (50) pour le contrôle du déplacement du bâti mobile (1') selon au moins une loi dynamique, en fonction de l'évolution du processus de soudage. ,

**13.** Dispositif de contrôle selon la revendication 12, **caractérisé par le fait que** le régulateur (7) comporte une unité de calcul (70) dans laquelle est mise en mémoire au moins une loi de déplacement relatif des pièces à souder (A, A') compte tenu des caractéristiques structurelles et dimensionnelles de celles-ci, ladite unité de calcul (70) recevant des signaux représentatifs, d'une part de la position à chaque instant du bâti mobile (1') par rapport au bâti fixe (1) et, d'autre part, de l'évolution en temps réel d'au moins l'un des paramètres électriques de soudage ($U_s$, $I_s$).

**14.** Dispositif de contrôle selon la revendication 13, **caractérisé par le fait que** le régulateur (7) est associé à deux boucles fermées de régulation en cascade, respectivement une boucle primaire (61) de régulation de la position relative du bâti mobile (1') et une boucle principale (62) d'établissement d'une référence de position en fonction de l'évolution d'au moins l'un des paramètres électriques de soudage ($U_s$, $I_s$) selon au moins une loi dynamique de déplacement mise en mémoire dans l'unité de calcul (70).

**15.** Dispositif de contrôle selon l'une des revendications 11 à 14, **caractérisé par le fait que** la machine de soudage est alimentée en courant électrique continu à partir du réseau par un transformateur (4) associé à un redresseur et à des moyens de modulation continue de la tension appliquée entre les deux paires de mors (2, 2') en fonction de la nature du métal et des dimensions des bandes (A, A') à souder.

**Claims**

1. Method for controlling the process of butt welding, by flash welding, two metallic parts (A, A') arranged one after the other along a longitudinal axis of travel, in a welding machine of the type comprising two pairs of clamping jaws (2, 2') mounted respectively on a fixed frame (1) and on a moving frame (1') which is moveable with respect to the fixed frame, electric welding means comprising an electric current source (4) with two poles connected respectively to the two pairs of clamping jaws, means (13, 13') for controlling the clamping of the two pairs of jaws (2, 2'), respectively close to a rear end (3), in the direction of travel, of a first part (A) and close to a front end (3') of a second part (A'), and means for controlling the longitudinal movement of the moving frame with respect to the fixed frame (1), for bringing said rear (3) and front (3') ends of the two parts (A, A') into contact and for the flow of an electric current with a welding voltage (U) and intensity (I), the welding process being performed in two successive phases, respectively a first flash welding phase to heat the ends in contact (3, 3') to a welding temperature by producing a series of electrical micro-contacts with the projection of sparks along said ends, and a second forging phase with interpenetration of the heated ends over a forging length, a method wherein the value of a set of electrical parameters including at least the voltage ($U_s$) and the intensity ($I_S$) of the welding current are determined at each moment, **characterised in that** the position of the moving frame (1') with respect to the fixed frame (1) is determined at each moment and that, during the first flash welding phase, the movement of the moving frame (1') towards the fixed frame (1') is controlled in position from at least one of the electrical welding parameters, while controlling the speed of movement (v) of the moving frame (1') according to a dynamic law determined in relation to the structural and dimensional characteristics of the parts to be welded (A, A'), so as, on the one hand, to increase the welding intensity ($I_S$) as the temperature rises, while gradually increasing the speed of approach (v) and, on the other hand, to limit the speed of approach (v) in order to avoid a short-circuit.

2. Method according to claim 1, **characterised in that**, during the flash welding phase, the speed of movement (v) of the moving frame (1') is controlled according to a mathematical law summing three terms, respectively, a first term corresponding to a basic speed of the moving frame proportional to the welding voltage ($U_S$), a second term limiting the speed of movement (v) relative to changes in the welding voltage ($U_S$) in order to avoid a risk of short-circuit and a third term obtained by comparison of the measured value, at each moment, of the intensity ($I_S$) of the welding current with a reference intensity ($I_{ref}$) depending on the characteristics of the parts to be welded (A, A'), in order to increase said intensity ($I_S$) while accelerating the movement as the temperature rises.

3. Method according to claim 2, **characterised in that** the control law for the speed of movement is in the following form

$$v(t) = VKU_S + S(KU_S - U_P) + \Gamma \int (I_{ref} - I_S) dt \qquad (1)$$

wherein:

- v(t) is the instantaneous speed of the moving jaw
- $VKU_S$ is a basic speed proportional to the welding voltage
- S is a sensitivity coefficient making it possible to modulate the speed correction
- K is the transformation ratio between the primary power supply circuit and the secondary welding circuit
- $U_S$ is the secondary welding voltage, measured at each moment
- $U_P$ is the primary power supply voltage
- $I_S$ is the measured value, at each moment, of the intensity of the welding current
- $I_{ref}$ is the reference value of the intensity of the welding current, depending on the parts to be welded
- $\Gamma$ is an acceleration regulation gain

4. Control method according to one of claims 1, 2, 3, **characterised in that**, during the second forging phase, the movement of the moving frame (1') is regulated in position so as to control the stopping of the moving frame (1') hydraulically and without any risk of rebound, after bringing the jaws (2, 2') closer over the forging length.

5. Method according to claim 4, **characterised in that**, for the second forging phase, the approach of the moving jaws (2') towards the fixed jaws (2) is controlled, in a very short time, over a determined course and at a speed of movement (v) controlled according to a continuous variation law comprising a sudden acceleration followed by a gradual deceleration until the moving jaws (2') are stopped in a position corresponding to a predetermined forging length.

**6.** Method according to claim 5, **characterised in that**, after the forging phase, the distance between the jaws is controlled so as to avoid any stress in the weld during the metal solidification time and that, at the same time, an electric current is circulated between the jaws, respectively fixed (2) and moving (2'), clamped on the two welded parts (A, A'), said electric current being capable of controlling, by a Joule effect, the rate of cooling of the thermally affected zone until complete solidification thereof.

**7.** Method according to claim 6, **characterised in that**, after solidification of the thermally affected zone, the latter is cooled by injecting air until an optimum temperature has been reached for planing the weld.

**8.** Method according to claim 7, **characterised in that**, after planing the weld, the moving jaws are moved a maximum distance away from the fixed jaws by placing the weld approximately at an equal distance from the two pairs of jaws and a modulated electric current is passed between the jaws so as to bring about, by a Joule effect, annealing of the welded zone, followed by controlled cooling.

**9.** Method according to claim 8, **characterised in that**, after planing the weld, the fixed jaws (2) are loosened while maintaining the moving jaws (2') clamped, the moving frame (1') is moved away by approximately half the maximum possible distance with respect to the fixed frame (1), carrying the welded zone along, the fixed jaws (2) are clamped and the moving jaws are loosened, the moving frame (1') is moved away to the maximum possible distance with respect to the fixed frame (1), the moving jaws (2') are clamped and a modulated electric current is passed between the two pairs of jaws (2, 2') thus clamped on the welded parts (A, A') so as to bring about annealing of the welded zone.

**10.** Method according to one of the preceding claims, **characterised in that** the two pairs of jaws (2, 2') are supplied with direct current at a continuously modulated voltage.

**11.** Device for implementing the welding control method as claimed in one of the preceding claims, comprising:

- means (6) for continuous measurement of a set of electric welding parameters including at least the voltage ($U_S$) and the intensity ($I_S$) of the welding current passing between the two pairs of jaws (2, 2'), **characterised in that** said device also comprises:
- means (15) for measuring, at each moment, the relative position of the moving jaws with respect to the fixed jaws,
- means (50, 7) for controlling in position the movement of the moving frame (1') on the basis of at least one of the measurements made, with real-time control of the speed (v) of approach of the jaws (2, 2') clamping the two parts (A, A').

**12.** Control device according to claim 11, wherein the means for moving the moving frame with respect to the fixed frame comprise at least one hydraulic jack (12) connected to a power supply circuit (5), **characterised in that** the regulation means comprise at least one hydraulic servo-valve (50) for controlling the hydraulic supply to the means (12) for controlling the movement of the moving frame (1') and a regulator (7) for controlling the servo-valve (50) for controlling the movement of the moving frame (1') according to at least one dynamic law, depending on the progress of the welding process.

**13.** Control device according to claim 12, **characterised in that** the regulator (7) includes a calculation unit (70) wherein is stored at least one relative movement law for the parts to be welded (A, A'), taking into account the structural and dimensional characteristics thereof, said calculation unit (70) receiving signals representative, on the one hand, of the position at each moment of the moving frame (1') with respect to the fixed frame (1) and, on the other hand, of the real-time changes in at least one of the electric welding parameters ($U_S$, $I_S$).

**14.** Control device according to claim 13, **characterised in that** the regulator (7) is connected to two closed cascade regulation loops, respectively a primary regulation loop (61) for the relative position of the moving frame (1') and a main loop (62) for setting a position reference depending on the changes in at least one of the electric welding parameters ($U_S$, $I_S$) according to at least one dynamic movement law stored in the calculation unit (70).

**15.** Control device according to one of claims 11 to 14, **characterised in that** the welding machine is supplied with direct electric current from the mains through a transformer (4) connected to a rectifier and means for continuous modulation of the voltage applied between the two pairs of jaws (2, 2') depending on the nature of the metal and the dimensions of the strips (A, A') to be welded.

**Patentansprüche**

1. Verfahren zum Steuern des Abbrennstumpfschweißverfahrens von zwei metallischen Werkstücken (A, A'), die hintereinander entlang einer Längsablaufrichtung in einer Schweißmaschine angeordnet sind, die zwei Spannbackenpaare (2, 2'), welche an einem feststehenden Gestell (1) bzw. an einem beweglichen Gestell (1'), das in Bezug auf das feststehende Gestell verschiebbar ist, angebracht sind, elektrische Schweißmittel mit einer elektrischen Stromquelle (4) mit zwei Polen, die jeweils mit den beiden Spannbackenpaaren verbunden sind, Mittel (13, 13') zum Steuern des Einspannens der beiden Spannbackenpaare (2, 2') in der Nähe eines in Ablaufrichtung gesehen hinteren Endes eines ersten Werkstücks (A) und in der Nähe eines vorderen Endes (3') eines zweiten Werkstücks (A'), Mittel zum Steuern einer Längsbewegung des beweglichen Gestells in Bezug auf das feststehende Gestell (1) zum Inkontaktbringen des hinteren Endes (3) und des vorderen Endes (3') der beiden Werkstücke (A, A') und zum Durchleiten eines elektrischen Stroms mit einer Spannung (U) und einer Schweißstromstärke (I) umfasst, wobei der Schweißverfahren in zwei aufeinanderfolgenden Phasen ausgeführt wird, und zwar einer ersten Abbrennphase, in der die in Kontakt stehenden Enden (3, 3') durch eine Reihe von Mikrokontakten und Versprühen von Funken entlang der Enden auf eine Schweißtemperatur erhitzt werden, und einer zweiten Schmiedephase, in der die erhitzten Enden über eine Schmiedelänge ineinander eindringen, wobei zu jedem Zeitpunkt der Wert einer Reihe elektrischer Parameter bestimmt wird, die mindestens die Spannung ($U_S$) und die Stärke des Schweißstroms ($I_S$) umfassen, **dadurch gekennzeichnet, dass** zu jedem Zeitpunkt die Position des beweglichen Gestells (1') in Bezug auf das feststehende Gestell (1) bestimmt wird und in der ersten Abbrennphase die Bewegung des beweglichen Gestells (1') zum feststehenden Gestell (1) an die Messung von mindestens einem der elektrischen Schweißparameter gekoppelt ist, indem die Bewegungsgeschwindigkeit (v) des beweglichen Gestells (1') nach einem dynamischen Gesetz gesteuert wird, das anhand der strukturellen und maßlichen Eigenschaften der zu verschweißenden Werkstücke (A, A') bestimmt wird, sodass zum einen die Schweißstromstärke ($I_S$) mit zunehmender Temperatur erhöht wird und die Annäherungsgeschwindigkeit (v) allmählich erhöht wird und zum anderen die Annäherungsgeschwindigkeit (v) begrenzt wird, um einen Kurzschluss zu vermeiden.

2. Verfahren nach Anspruch 1, **dadurch gekennzeichnet, dass** während der Abbrennphase die Bewegungsgeschwindigkeit (v) des beweglichen Gestells (1') nach einem mathematischen Gesetz gesteuert wird, das die Summe aus drei Termen bildet, und zwar einem ersten Term, welcher der Grundgeschwindigkeit des beweglichen Gestells entspricht, die proportional zur Schweißspannung ($U_S$) ist, einem zweiten Term zur Begrenzung der Bewegungsgeschwindigkeit (v) in Abhängigkeit von der Änderung der Schweißspannung ($U_S$), um die Gefahr eines Kurzschlusses zu vermeiden, und einem dritten Term, der durch Vergleichen des zu jedem Zeitpunkt gemessenen Werts der Stärke ($I_S$) des Schweißstroms mit einer Referenzstromstärke ($I_{ref}$) erhalten wird, die von den Eigenschaften der zu verschweißenden Werkstücke (A, A') abhängig ist, um diese Stromstärke ($I_S$) zu erhöhen, indem die Bewegung mit zunehmender Temperaturerhöhung beschleunigt wird.

3. Verfahren nach Anspruch 2, **dadurch gekennzeichnet, dass** das Gesetz zur Steuerung der Bewegungsgeschwindigkeit die folgende Form hat:

$$v(t) = VKU_s + S(KU_s - U_p) + \Gamma \int (I_{ref} - I_s)\,dt \qquad (1)$$

worin:

- v(t) die Momentangeschwindigkeit der beweglichen Spannbacke ist
- $VKU_S$ eine zur Schweißspannung proportionale Grundgeschwindigkeit ist
- S ein Empfindlichkeitsfaktor ist, der es ermöglicht, die Gschwindigkeitskorrektur anzupassen
- K das Transformationsverhältnis zwischen dem Primärversorgungskreis und dem Sekundärschweißkreis ist
- $U_S$ die zu jedem Zeitpunkt gemessene Sekundärschweißspannung ist
- Up die Primärversorgungsspannung ist
- $I_S$ der zu jedem Zeitpunkt gemessene Wert der Schweißstromstärke ist
- $I_{ref}$ der von den zu verschweißenden Werkstücken abhängige Referenzwert der Schweißstromstärke ist
- r ein Verstärkungsfaktor zur Regelung der Beschleunigung ist.

4. Verfahren zum Steuern nach einem der Ansprüche 1, 2, 3, **dadurch gekennzeichnet, dass** während der zweiten Schmiedephase eine Positionsregelung der Bewegung des beweglichen Gestells (1') vorgenommen wird, sodass das Stoppen des beweglichen Gestells (1') nach dem Annähern der Spannbacken (2, 2') über die Schmiedelänge hydraulisch und ohne Rückprallgefahr gesteuert wird.

5. Verfahren nach Anspruch 4, **dadurch gekennzeichnet, dass** bei der zweiten Schmiedephase das kurzzeitige Annähern der beweglichen Spannbacken (2') an die feststehenden Spannbacken (2) über einen bestimmten Weg und mit einer Bewegungsgeschwindigkeit (v) gesteuert wird, die nach einem Gesetz der ständigen Änderung gesteuert wird, welches eine abrupte Beschleunigung mit anschließender allmählicher Verzögerung bis zum Stillstand der beweglichen Spannbacken (2') in einer Position, die einer vorgegebenen Schmiedelänge entspricht, umfasst.

6. Verfahren nach Anspruch 5, **dadurch gekennzeichnet, dass** der Abstand zwischen den Spannbacken nach der Schmiedephase so gesteuert wird, dass jede Beanspruchung der Schweißung während der Metallverfestigungszeit vermieden wird und dass gleichzeitig zwischen den feststehenden Spannbacken (2) und den beweglichen Spannbacken (2'), zwischen denen die beiden verschweißten Werkstücke (A, A') eingespannt sind, ein elektrischer Strom fließt, der geeignet ist, durch den Joule-Effekt die Abkühlgeschwindigkeit des thermisch beanspruchten Bereichs bis zu dessen vollständiger Abkühlung zu steuern.

7. Verfahren nach Anspruch 6, **dadurch gekennzeichnet, dass** der thermisch beanspruchte Bereich nach seiner Verfestigung durch Beblasen mit Luft bis auf eine zum Abhobeln der Schweißnaht optimale Temperatur gekühlt wird.

8. Verfahren nach Anspruch 7, **dadurch gekennzeichnet, dass** nach dem Hobeln der Schweißnaht die beweglichen Spannbacken so weit wie möglich von den feststehenden Spannbacken beabstandet werden, wobei die Schweißnaht in etwa gleich weit von den beiden Spannbackenpaaren entfernt ist, und man zwischen den Spannbacken einen elektrischen Strom fließen lässt, der so moduliert wird, dass der Schweißbereich durch den Joule-Effekt wieder erhitzt und anschließend kontrolliert abgekühlt wird.

9. Verfahren nach Anspruch 8, **dadurch gekennzeichnet, dass** nach dem Hobeln der Schweißnaht die feststehenden Spannpacken (2) gelöst werden, während die beweglichen Spannbacken (2') angezogen bleiben, das bewegliche Gestell (1') um ungefähr die Hälfte des größtmöglichen Abstands vom feststehenden Gestell (1) beabstandet wird, wobei der Schweißbereich mitgenommen wird, die feststehenden Spannbacken (2) angezogen und die beweglichen Spannbacken (2') gelöst werden, das bewegliche Gestell (1') so weit wie möglich vom feststehenden Gestell (1) beabstandet wird, die beweglichen Spannbacken (2') angezogen werden und man zwischen den beiden Spannbackenpaaren (2, 2'), zwischen denen die geschweißten Werkstücke (A, A') eingespannt sind, einen elektrischen Strom fließen lässt, der so moduliert wird, dass der Schweißbereich wieder erhitzt wird.

10. Verfahren nach einem der vorangehenden Ansprüche,
    **dadurch gekennzeichnet, dass** die beiden Spannbackenpaare (2, 2') mit Gleichstrom unter einer ständig modulierten Spannung versorgt werden.

11. Vorrichtung zur Durchführung des Verfahrens zum Steuern des Schweißens nach einem der vorangehenden Ansprüche,
    umfassend:

    - Mittel (6) zum ständigen Messen einer Reihe von elektrischen Schweißparametern, die mindestens die Spannung ($U_S$) und die Stärke ($I_S$) des zwischen den beiden Spannbackenpaaren (2, 2') fließenden Stroms umfassen, **dadurch gekennzeichnet, dass** diese Vorrichtung darüber hinaus umfasst:
    - Messmittel (15), um jederzeit die relative Position der beweglichen Spannbacken in Bezug auf die feststehenden Spannbacken zu messen,
    - Regelungsmittel (50, 7) zur Positionsregelung der Bewegung des beweglichen Gestells (1') anhand von mindestens einer der durchgeführten Messungen, mit Echtzeitsteuerung der Annäherungsgeschwindigkeit (v) der Spannbacken (2, 2') zum Einspannen der beiden Werkstücke (A, A').

12. Vorrichtung zum Steuern nach Anspruch 11, in der die Mittel zum Bewegen des beweglichen Gestells in Bezug auf das feststehende Gestell mindestens einen Hydraulikzylinder (12) umfassen, der mit einem Versorgungskreis (5) verbunden ist,
    **dadurch gekennzeichnet, dass** die Regelungsmittel mindestens ein hydraulisches Servoventil (50) zur Steuerung der hydraulischen Versorgung der Mittel (12) zum Steuern der Bewegung des beweglichen Gestells (1') und einen Regler (7) zum Steuern des Servoventils (50) zur Steuerung der Bewegung des beweglichen Gestells (1') nach mindestens einem dynamischen Gesetz in Abhängigkeit von der Entwicklung des Schweißvorgangs umfassen.

13. Vorrichtung zum Steuern nach Anspruch 12, **dadurch gekennzeichnet, dass** der Regler (7) eine Recheneinheit (70) umfasst, in der mindestens ein Gesetz für die relative Bewegung der zu verschweißenden Werkstücke (A, A') unter Berücksichtigung ihrer strukturellen und maßlichen Eigenschaften gespeichert ist, wobei diese Recheneinheit (70) Signale empfängt, die zum einen für die jeweilige momentane Position des beweglichen Gestells (1') in Bezug auf das feststehende Gestell (1) und zum anderen für die Echtzeitänderung von mindestens einem der elektrischen Schweißparameter ($U_S$, $I_S$) repräsentativ sind.

14. Vorrichtung zum Steuern nach Anspruch 13, **dadurch gekennzeichnet, dass** der Regler (7) mit zwei kaskadierten geschlossenen Regelkreisen verbunden ist, und zwar einem ersten Kreis (61) zur Regelung der relativen Position des beweglichen Gestells (1') und einem Hauptkreis (62) zur Erstellung einer Positionsreferenz in Abhängigkeit von mindestens einem der elektrischen Schweißparameter ($U_s$, $I_s$) nach mindestens einem in der Recheneinheit (70) gespeicherten dynamischen Bewegungsgesetz.

15. Vorrichtung zum Steuern nach einem der Ansprüche 11 bis 14, **dadurch gekennzeichnet, dass** die Schweißmaschine vom Netz über einen Transformator (4) mit elektrischem Strom versorgt wird, der mit einem Gleichrichter und Mitteln zum kontinuierlichen Modulieren der zwischen den beiden Spannbackenpaaren (2, 2') in Abhängigkeit von der Art des Metalls und den Abmessungen der zu verschweißenden Bänder (A, A') anzulegenden Spannung verbunden ist.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 57019187 A
- FR 2756504
- US 3528340 A
- EP 0413821 A
- US 6429398 B